# EUROPÄISCHE PATENTANMELDUNG

(11) **EP 4 282 647 A1**
(43) Veröffentlichungstag der Anmeldung: **29.11.2023**
(21) Anmeldenummer: 23174778.3
(22) Anmeldetag: 23.05.2023
(51) Int. Cl.: B32B 7/12, B32B 15/12, B32B 15/20, B32B 27/10, B32B 27/36, B32B 27/32, B32B 27/30, B32B 29/00

(54) **VERBUND ZUR VERPACKUNG VON LEBENSMITTELN ODER PHARMAZEUTIKA**

(30) Priorität: 23.05.2022 DE 102022112863
(71) Anmelder: Constantia Pirk GmbH & Co. KG, 92712 Pirk (DE)
(72) Erfinder: Stein, Tobias, 92637 Weiden in der Oberpfalz (DE); Kick, Markus, 92637 Weiden in der Oberpfalz (DE); Goehler, Niels, 91186 Büchenbach (DE)
(74) Vertreter: Hannke Bittner & Partner mbB Regensburg

(57) **Zusammenfassung**

Die Erfindung betrifft einen Verbund (1), bevorzugt zur Verpackung von Lebensmitteln, mit einem Träger (2) der eine erste Oberfläche (2a) und eine der ersten Oberfläche (2a) gegenüberliegende zweite Oberfläche (2b) aufweist, wobei an der ersten Oberfläche (2a) eine erste Barriereschicht angeordnet ist und an der zweiten Oberfläche eine zweite Barriereschicht (6) angeordnet ist, dadurch gekennzeichnet, dass der Träger einen vorgegebenen Anteil aus recyceltem Material aufweist.

## Beschreibung

Die vorliegende Erfindung bezieht sich auf eine Verpackung zum Verpacken von Produkten, insbesondere von Lebensmitteln oder pharmazeutischen Erzeugnissen. Aus dem Stand der Technik sind unterschiedlichste Verpackungen bekannt, wie beispielsweise Trays, Becher, Flowpacks, Kapseln und dergleichen. Diese sind üblicherweise aus lebensmittelverträglichen Stoffen hergestellt. Bislang werden für derartige Verpackungen überwiegend Metalle, Kunststoffe oder schwierig zu entsorgende Verbünde verwendet. Es besteht mehr und mehr der Bedarf nach Materialien, welche eine höhere Umweltverträglichkeit aufweisen.

Der vorliegenden Erfindung liegt daher die Aufgabe zugrunde, einen Verbund und insbesondere eine Verpackung für Lebensmittel herzustellen, welche eine gegenüber dem Stand der Technik höhere Umweltfreundlichkeit aufweisen. Dies wird erfindungsgemäß durch die Gegenstände der unabhängigen Patentansprüche erreicht. Vorteilhafte Ausführungsformen und Weiterbildungen sind Gegenstand der Unteransprüche.

Ein erfindungsgemäßer Verbund, insbesondere ein mehrlagiger bzw. mehrschichtiger Verbund, bevorzugt zur Verpackung von Lebensmitteln weist einen Träger auf, der eine erste Oberfläche und eine der ersten Oberfläche gegenüberliegende zweite Oberfläche aufweist. Dabei ist (wenigstens mittelbar) an der ersten Oberfläche eine erste Barriereschicht angeordnet und (wenigstens mittelbar) an der zweiten Oberfläche ist eine zweite Barriereschicht angeordnet.

Erfindungsgemäß weist der Träger (im Folgenden auch als Basispapier bezeichnet) einen vorgebbaren Anteil aus recyceltem Material auf.

Es wird also im Rahmen der Erfindung vorgeschlagen, wenigstens für den Träger wenigstens anteilsweise recyceltes Material zu verwenden. Dies ist für Lebensmittelverpackungen ungewöhnlich, da bislang Bedenken hinsichtlich der Lebensmittelverträglichkeit bestanden. Diese Bedenken sind im Wesentlichen damit begründet, dass in dem zu recycelnden Stoff (beziehungsweise Stoffgemisch) unbekannte Substanzen als Verunreinigung enthalten sein könnten, die während des Recyclingprozesses nicht abgetrennt werden und sich so im Rezyklat wiederfinden könnten. Die Lebensmittelverträglichkeit diese Stoffe ist nicht in jedem Fall gewährleistet.

Bevorzugt weist wenigstens eine Barriereschicht und bevorzugt die erste Barriereschicht und die zweite Barriereschicht einen vorgegebenen Anteil an recyceltem Material auf.

Besonders bevorzugt handelt es sich bei dem Träger um ein Papier oder ein papierartiges Material. Für Papier bestehen etablierte Recyclingprozesse und sehr effiziente Verfahren zur Abtrennung von Verunreinigungen, um einen hohen Weißgrad des Recyclingpapiers gewährleisten zu können. Diese Prozesse können auch für den Verbund gemäß der vorliegenden Erfindung beziehungsweise dessen Träger genutzt werden. Bevorzugt ist der Träger einlagig aufgebaut. Es wäre jedoch auch möglich, dass der Träger mehrlagig aufgebaut ist. Dadurch können Eigenschaften ausgewählt aus einer Gruppe, die Dicke, Flexibilität, Bruchdehnung, Knickwinkel, Grammatur, Steifigkeit, Zugfestigkeit, Reißlänge, Falteigenschaft (beispielsweise Deadfold) und Dichte umfasst, gemäß den jeweiligen Anforderungen angepasst werden.

Besonders bevorzugt kann sich dabei bei dem recycelten Material um Altpapier handeln.

Unter Recycling wird jedes Verwertungsverfahren verstanden, durch das Abfälle zu Erzeugnissen, Materialien oder Stoffen entweder für den ursprünglichen Zweck oder für andere Zwecke aufbereitet werden. Recycling im Sinn der vorliegenden Erfindung schließt auch die Aufbereitung organischer Materialien ein, nicht aber die energetische Verwertung und die Aufbereitung zu Materialien, die für die Verwendung als Brennstoff oder zur Verfüllung bestimmt sind.

Entsprechende Produkte, auch als Rezyklate bezeichnet, können daher üblicherweise nur in einem Aufbereitungsprozess aus Abfällen entstehen. Dies trifft beispielsweise für PIR (Post-Industrial-Rezyklate) und PCR (Post-Consumer-Rezyklate) gleichermaßen zu. Dabei geben die Vorsilben der Rezyklate (PIR und PCR) einen Aufschluss auf die ursprüngliche Herkunft des Materials, das als Abfall angefallen ist und zum Rezyklat aufbereitet wurde.

Als besonders geeignet haben sich im zur Verwendung in einem solchen Verbund recycelte Materialien erwiesen, die durch ein mechanisches und/oder chemisches Recycling erhalten werden. Insbesondere sind jedoch recycelte Materialien bevorzugt bei denen es sich um ein mechanisch recyceltes Material handelt.

Die mechanische, stoffliche Wiederverwertung erfolgt bevorzugt durch eine Regranulierung mittels Extrusionsverfahren. Die chemische stoffliche Verwertung erfolgt bevorzugt über einen Polymerabbau und anschließender Synthese der daraus gewonnen Monomeranteile.

Als PIR werden Abfälle aus Produktionsrückständen bei der Herstellung von Papier- und Kartonprodukten beziehungsweise Kunststoffverpackungen oder anderen Kunststoffprodukten bezeichnet, die nicht wieder im selben Prozess eingesetzt wurden. Fällt das Material dagegen als Abfall bei Haushalten, Industrie oder Gewerbe (in ihrer Rolle als Endkonsumenten) an, so sind die daraus entstehenden Rezyklate als Post-Consumer-Rezyklate (PCR) zu bezeichnen.

Bisher sind Versuche, recycelte Materialien für Verpackungszwecke hochwertiger Produkte, insbesondere von Lebensmitteln zu verwenden gescheitert, da die so erhaltenen Verpackungsmittel lebensmittelrechtlich nicht konform waren, eine unerwünscht hohe Abklatschmigration unerwünschter Substanzen, und/oder eine nicht ausreichende mechanische Stabilität aufwiesen (beispielsweise durch (gegenüber Primärfasern) reduzierte Faserlängen bei recyceltem Papier). Vorzugsweise erfüllt ein wie oben beschriebener Verbund daher die lebensmittelrechtlichen Vorgaben, weist keine oder lediglich zulässig geringe Abklatschmigration auf und/oder weist eine für Verpackungszwecke ausreichend hohe mechanische Stabilität auf. Zur Reduzierung und/oder Verhinderung der Abklatschmigration hat sich insbesondere die Nutzung eines Überdrucklackes als vorteilhaft erwiesen.

Bevorzugt weist der Träger eine Dicke auf, die größer ist als 15 µm. Besonders bevorzugt weist der Träger eine Dicke auf, die kleiner ist als 1200 µm.

Bei einer weiteren bevorzugten Ausführungsform weist der Träger eine Dichte auf, die größer ist als 0,6 g/cm³. Besonders bevorzugt weist der Träger eine Dichte auf, die kleiner ist als 1,4 g/cm³.

Bei einer weiteren bevorzugten Ausführungsform ist der recycelte Anteil ein Post-Industrial-Rezyklat (PIR) und/oder ein Post-Consumer-Rezyklat (PCR). Es wäre jedoch auch denkbar, dass beide Rezyklate gemischt verwendet werden. Dabei können die Anteile dieser Rezyklate ebenfalls variieren. Vorzugsweise handelt es sich im Wesentlichen um ein PIR oder das Gemisch umfasst einen überwiegenden Anteil PIR, da für PIR aufgrund der üblicherweise standardisierten Materialien für die Produktion der Produkte, bei denen die PIR anfallen, eine weitgehend bekannte und gleichbleibende Zusammensetzung haben. Verunreinigungen, deren Lebensmittelverträglichkeit nicht gewährleistet werden kann, können dadurch weitgehend ausgeschlossen werden.

Die Anmelderin hat ermittelt, dass für derartige Verpackungen durchaus auch rezyklierte Materialien verwendet werden können, insbesondere wenn diese mit wenigstens einer geeigneten Barriereschicht hinreichend abgedeckt und "isoliert" sind. Besonders bevorzugt weist die oder weisen die Barriereschichten mindestens eine Eigenschaft auf, die ausgewählt ist aus einer Gruppe, die eine vorgegebene Fettbeständigkeit, eine optische Dichtigkeit, eine Gasbeständigkeit und eine Flüssigkeitsdichtigkeit umfasst.

Vorzugsweise weist die oder weisen die Barriereschichten eine die Migration einer unerwünschten Substanz durch die Barriereschicht verhindernde oder zumindest verzögernde Eigenschaft auf. Dabei ist die unerwünschte Substanz vorzugsweise in dem recycelten Material (vorzugsweise des Trägers) enthalten. Die Verhinderung oder Verzögerung der Migration der unerwünschten Substanz ist insbesondere von Bedeutung für lebensmittelrechtliche Konformität. Eine solche unerwünschte Substanz kann aber auch deshalb unerwünscht sein, da sie eine mechanische und/oder optische Eigenschaft des Verbundes in unerwünschter Weise verändert. Die Verhinderung oder Verzögerung der Migration dient insbesondere dazu dass ein solcher Verbund trotz des enthaltenen Recyclinganteils auch für Lebensmittelkontakt geeignet ist.

Bei mindestens einer Substanz deren Migration durch die Barriereschicht verhindert oder zumindest verzögert wird, handelt es sich vorzugsweise um eine Substanz, die ausgewählt ist aus einer Gruppe, die Mineralölbestandteile (MOSH/MOAH), Per- und polyfluorierte Alkylsubstanzen (PFAS), Bisphenole, Phthalate und weitere umfasst. Substanzen aus dieser Gruppe werden beispielsweise in Druckfarben, Klebern, Beschichtungen verwendet und können über die Verwertung von damit versehenem Altpapier in das Recyclingpapier übergehen. Die Substanz kann jedoch auch auf anderem Weg, beispielsweise als Druckfarbe in den Verbund gelangen.

Vorzugsweise weist mindestens eine Barriereschicht eine Barriereeigenschaft gegenüber einer Substanz auf, die ausgewählt ist aus einer Gruppe, die Wasserdampf, Sauerstoff und Mineralölkohlenwasserstoffe, Aromastoffe, Fett, Gase umfasst.

Weist die Barriereschicht eine Barriereeigenschaft gegenüber Sauerstoff auf, beträgt vorzugsweise die Sauerstoffdurchlässigkeitsrate (Oxygen transmission rate, "OTR"), gemessen bei 23°C und 50% relativer Luftfeuchtigkeit (r.h.) ≤ 40 cm³/(m²•Tag), bevorzugt ≤ 35 cm³/(m²•Tag), weiter bevorzugt ≤ 30 cm³/(m²•Tag) auf.

Weist die Barriereschicht eine Barriereeigenschaft gegenüber Wasserdampf auf, beträgt vorzugsweise die Wasserdampfdurchlässigkeitsrate (Water vapour transmission rate, "WVTR"), gemessen bei 38 °C und 90% r.h. ≤ 50 g/(m²•Tag), bevorzugt ≤ 45 g/(m²•Tag), weiter bevorzugt ≤ 40 g/(m²•Tag) auf.

Weist die Barriereschicht eine Barriereeigenschaft gegenüber Hexan auf, beträgt vorzugsweise die Hexandampfdurchlässigkeitsrate (Hexane Vapor Transmission Rate, "HVTR"), gemessen bei 23 °C und 50 % r.h. ≤ 100 g/(m²•Tag), bevorzugt ≤ 50 g/(m²•Tag), weiter bevorzugt ≤ 30 g/(m²•Tag), insbesondere bevorzugt ≤ 15 g/(m²•Tag).. Hexan dient dabei als Modellsubstanz für Aussagen zur Barrierewirkung gegenüber unpolaren Substanzen, insbesondere zur Bestimmung der Migrationsrate von gesättigten Mineralölkohlenwasserstoffen. Es wurde gefunden, dass aus der (aus der HVTR ableitbaren) n-Hexan-Permeationsbeständigkeit der Barriereschicht in guter Näherung eine Barrierewirkung gegenüber unpolaren Substanzen abgeleitet werden kann.

Bei einer bevorzugten Ausführungsform ist der Anteil an recyceltem Material größer als 1 %, bevorzugt größer als 5 %, bevorzugt größer als 10 %, bevorzugt größer als 20 %, bevorzugt größer als 30 %, bevorzugt größer als 40 % und besonders bevorzugt größer als 50 %. Sofern nicht anders angegeben, sollen diese und alle weiteren Prozentangaben im Rahmen dieser Erfindung als Gewichtsprozent (Gewicht/Gewicht) verstanden werden. Es wäre weiterhin möglich, dass der Anteil an recyceltem Material sogar noch über diesen Werten geht und theoretisch bis 100 % betragen kann. Geringfügige Beeinträchtigungen der mechanischen Werte können bei sehr hohen Anteilen an recyceltem Material toleriert werden. Insbesondere liegt der Anteil an recyceltem Material sowohl bezogen auf den Träger als auch bezogen auf die Barriereschicht als auch bezogen auf den Verbund und insbesondere auch bezogen auf die gesamte Verpackung (d.h. den Verbund und ein mit diesem verbundenes Objekt wie etwa ein Tray bei den oben genannten Werten) bevorzugt größer als 1%, bevorzugt größer als 5%, bevorzugt größer als 10%, bevorzugt größer als 20%, 30%, 40% und insbesondere 50%.

Besonders bevorzugt ist wenigstens eine Barriereschicht als Überdrucklack ausgebildet oder weist einen Überdrucklack auf. Mit anderen Worten, fungiert der Überdrucklack als Barriereschicht bevorzugt für die Abklatschmigration. So ist es denkbar, dass ein Druck auf einer äußersten Schicht angeordnet ist. Das Aufbringen eines Überdrucklacks hat sich einerseits als besonders einfach und mit gängigen Maschinen ausführbar gezeigt. Andererseits hat sich gezeigt, dass eine als Überdrucklack aufgebrachte Barriereschicht besonders dicht ausgebildet sein kann, da kaum Unterbrechungen der Schicht auftreten.

Als besonders geeignet hat sich ein Überdrucklack mit einer Grammatur im Bereich von 1 - 10 g/m², bevorzugt im Bereich von 1 - 3 g/m² erwiesen. Ein Überdrucklack mit einer solchen Grammatur kann kostengünstig realisiert werden und weist eine ausreichend gute Barriereeigenschaft im Hinblick auf die Abklatschmigration auf.

Weiterhin ist es auch möglich, dass ein Druck auf dem Träger, d. h. dem Basispapier innen- und/oder außenliegend angeordnet ist. Daneben ist es auch möglich, dass ein Druck auf der Barriereschicht aufgebracht ist. Daneben ist es auch denkbar, eine einfarbige Druckausführung vorzusehen, oder einen eingefärbten Klebstoff. Dieser kann beispielsweise mit Farbstoffen eingefärbt sein. Ein solcher Druck ermöglicht beispielsweise, Produktinformationen auf eine Verpackung für einen Kunden sichtbar aufzubringen.

Bei einer bevorzugten Ausführungsform enthält der Überdrucklack bzw. die Barriereschicht eine Substanz, welche aus einer Gruppe von Substanzen ausgewählt ist, welche PolyvinylAlkohol (bevorzugt als ein Homo- oder Copolymer), ein Ethylen-Vinyl-Alkohol-Copolymer, ein oder mehrere Copolymere eines Polyesters und aliphatischen Epoxyden, ein oder mehrere Copolymere eines (insbesondere alkylierten und/oder arylierten) Acrylats und/oder aliphatischen Epoxiden, ein oder mehrere Homo- oder Co-polymere des Polyvinyl-pyrolidon, ein oder mehrere Cycloolefin-Copolymere (COC), insbesondere bevorzugt auf Basis von Norbornen Polymeren (COP) und bevorzugt auf Basis Norbornen-Ethylen-Copolymeren (COC), (welche teilweise oder vollständig hydriert sein können), Polyamiden, Cellulosederivaten, ein oder mehrere lösliche Polycarbonat-Copolymere, einzeln oder in einer Kombination mehrerer der in der Gruppe enthaltenen Polymere und bevorzugt eine Vernetzungskomponente aus der Gruppe der Isocyanate, Amine, Anhydride, Oxazoline, Azeridine, reaktive Silane oder Dicarbonsäuren enthält.

Bei einer weiteren vorteilhaften Ausführungsform ist auf wenigstens einer Barriereschicht und bevorzugt auf beiden Barriereschichten eine weitere Substanz aufgetragen. Bevorzugt handelt es sich bei dieser weiteren Substanz um ein Siegelmedium, über welches der Verbund mit sich selbst oder mit zumindest einer weiteren Schicht verbunden werden kann. Beispielhaft kann die Verbindung über eine Kaltsiegelbeschichtung, einen Hotmelt oder über eine Heißsiegellackbeschichtung hergestellt werden. Dabei kann diese Substanz vollflächig oder teilweise aufgetragen sein. Dies ist besonders vorteilhaft, wenn keine der Barriereschichten siegelfähig ist.

Auf diese Weise kann das Auftreten von Abklatsch verhindert werden. Außerdem ermöglicht eine solche Schicht das Anbinden des Verbundes an ein weiteres Verpackungselement, das zu verpackende Produkt oder sich selbst. Besonders bevorzugt ist in der Rolle (insbesondere einer Rolle des Verbundmaterials) eine Offsetmigration verhindert (dies bedeutet, dass keine Stoffe in der Rolle von der Außenseite zur Innenseite übergehen). Daneben ist es möglich, dass die Offsetmigration bevorzugt durch die außenliegende Barriereschicht vermieden wird. Im Falle einer Kunststofffolie als Barriereschicht kann auch diese einen PIR oder PCR Anteil von bis zu 100 % aufweisen.

Bei einer bevorzugten Ausführungsform handelt es sich bei der Barriereschicht um eine Folie, besonders bevorzugt um eine Aluminiumfolie, PET-Folie, oder eine PLA- (Polylactid Acid) oder Polyolefin-Folie. Es wäre auch denkbar, beidseitig an dem Träger eine Folie anzubringen. Bevorzugt ist jedoch eine Seite des Trägers bzw. des Papiers durch Wasser angreifbar.

Denkbar sind jedoch auch andere Materialien mit Barriereeigenschaften. Beispielsweise könnte eine anorganische Beschichtung mit PET, PLA oder dergleichen verwendet werden. Auch ist es möglich, dass eine Seite des Laminats oder Papiers bzw. des Verbundes eine ausreichende Angriffsfläche für Wasser aufweist.

Bei einer weiteren vorteilhaften Ausführungsform ist die Barriereschicht als Barrierelack, als Barrierefilm, oder auch als Verbund aus mehreren Barriereschichten aufgebaut. So kann es sich beispielsweise um einen (mehrschichtigen und insbesondere wenigstens dreischichtigen und insbesondere genau dreischichtigen) Verbund handeln, der aus PE, PE und EVOH (Ethylen-Vinylalkohol-Copolymer) gebildet ist. Dabei ist bevorzugt zumindest eine der Schichten metallisiert und/oder beschichtet. Besonders bevorzugt ist die EVOH-Schicht metallisiert. Daneben kann die Barriereschicht eine Extrusionsbeschichtung, beispielsweise aus EVOH, oder auch ein Barrierepapier (zum Beispiel ein transluzentes Papier) aufweisen.

Besonders bevorzugt weist die Barriereschicht, beispielsweise bei der Verwendung einer PET-Folie, eine Dicke auf, die größer ist als 0,5 µm, bevorzugt größer als 3 µm, bevorzugt größer als 4,5 µm. Bei der weiteren vorteilhaften Ausführungsform weist die Barriereschicht eine Dicke auf, die geringer ist als 200 µm. Es hat sich gezeigt, dass bei derartigen Schichtdicken die Barriereschicht einerseits unerwünschte Substanzen wirksam von einem zu verpackenden Lebensmittel fernhält, andererseits aber kostengünstig aufgebracht werden kann und flexible Verpackungen ermöglicht.

Bevorzugt weist eine Barriereschicht eine Dicke im Bereich von 0,5 - 200 µm auf. Diese Dicke wurde als weitgehend vom Material unabhängig als besonders geeignet gefunden, ist jedoch besonders bevorzugt bei einer Barriereschicht welche ein Material aus einer Gruppe enthält, die PET, PE, PP, PHBH, Stärke, PVOH, PLA, Aluminium, Gold, Kupfer, Silizium und deren Oxide umfasst. Dabei haben sich PHBH, Stärke, PVOH aufgrund ihrer biologischen Abbaubarkeit und/oder Kompostierbarkeit als besonders bevorzugt erwiesen. Als besonders bevorzugt haben sich auch die oben genannten (organischen) Barriereschichten erwiesen, wenn sie eine optionale zusätzliche (vorzugsweise anorganische) Beschichtung aufweisen.

Die optionale Beschichtung umfasst vorzugsweise Aluminium, Gold, Kupfer, Silizium und/oder deren Oxide.

Bei einer weiteren bevorzugten Ausführungsform ist ein Barrierelack derart ausgebildet, dass er nicht zu einer Verblockung neigt. Zur Verbesserung der Blockeigenschaften können aus dem Stand der Technik bekannte Füllstoffe, beispielsweise Kieselsäure, eingesetzt werden.

Bei einer bevorzugten Ausführungsform erfüllt die Barriereschicht eine oder mehrere Aufgaben und/oder ist als Barriere für unterschiedliche Substanzen geeignet. Dabei kann es sich beispielsweise um eine Fettbarriere handeln. Daneben kann es sich um eine Barriere für gesättigte Mineralölkohlenwasserstoffe handeln (MOSH, Mineraloil Saturated Hydrocarbons). Weiterhin kann es sich (ergänzend oder alternativ) um eine Barriere für aromatische Mineralölkohlenwasserstoffe handeln (MOAH, Mineraloil Aromatic Hydrocarbons).

Daneben kann es sich um eine Wasserdampfbarriere handeln (WVTR, Moisture Vapor Transmission Rate). Schließlich kann es sich auch um eine Sauerstoffbarriere handeln, welche entsprechend eine geringe Sauerstofftransmissionsrate (OTR) aufweist. Daneben kann eine Barriereschicht auch eine Aromabarriere sein.

Die oben genannten Barriereeigenschaften können in einer Barriereschicht jeweils ergänzend oder alternativ zueinander verwirklicht sein. Dabei kann die Barriereeigenschaft gegenüber verschiedenen Substanzen unterschiedlich stark ausgeprägt sein. Vorzugsweise stellt die Barriereschicht eine Barriere für mindestens 2, vorzugsweise mindestens 3, weiter bevorzugt mindestens 4, insbesondere bevorzugt mindestens 5 der oben genannten Substanzklassen dar. Dadurch wird ein Verbund mit einer solchen Barriereschicht besonders flexibel einsetzbar und ist insbesondere zur Verpackung einer großen Auswahl von Produkten geeignet.

Wie oben erwähnt, können die beiden Barriereschichten im Wesentlichen gleich ausgebaut bzw. ausgebildet sein.

Bei einer bevorzugten Ausführungsform umfasst die Barrierefolie einen Recyclinganteil von bis zu 100 %.

Bei einer bevorzugten Ausführungsform ist zwischen dem Träger und wenigstens einer Barriereschicht und bevorzugt zwischen dem Träger und beiden Barriereschichten wenigstens eine weitere Schicht angeordnet. Bevorzugt weist der Verbund auf diese Weise wenigstens vier und bevorzugt wenigstens fünf Schichten und/oder Lagen auf.

Bevorzugt ist diese weitere Schicht aus einer Gruppe von Schichten ausgewählt, welche Klebstoffschichten, Farbschichten, Primerschichten, insbesondere Primerschichten auf Bio-Basis, Druckfarbe und dergleichen enthält. Ein Primer bzw. eine Primerschicht kann dabei auf Acrylatbasis aufgebaut sein oder auch beispielsweise bei bio-abbaubarer Beschichtung aus Stärke. Besonders bevorzugt weist eine Primer- oder eine Kleberschicht eine Trockengrammatur auf, die zwischen 0,5 und 20 g/m² liegt.

Bevorzugt ist zwischen dem Träger und der ersten Barriereschicht, bei der es sich insbesondere um eine äußerste oder dem Füllprodukt abgewandte Schicht handelt, eine Farbschicht und/oder eine Klebstoffschicht angeordnet.

Bevorzugt ist zwischen dem Träger und der zweiten Barriereschicht, bei der es sich insbesondere um eine innere oder eine dem Füllprodukt zugewandte Schicht handelt, eine Primerschicht (insbesondere eine biologisch abbaubare Primerschicht), eine Druckfarbe oder eine Klebstoffschicht angeordnet.

Bei einer bevorzugten Ausführungsform ist wenigstens eine Barriereschicht als Überdrucklack ausgebildet. Insbesondere handelt es sich hierbei um die äußere Schicht, d. h. die Schicht, die dem Produkt abgewandt ist.

Bei einer weiteren bevorzugten Ausführungsform ist die innere Barriereschicht, also insbesondere die dem Packgut zugewandte Schicht ein Barrierelack. Dieser weist besonders bevorzugt eine Trockengrammatur auf, die zwischen 1 g/m² und 20 g/m² liegt. Diese Schicht kann optional auch aus einem Material bestehen oder ein Material aufweisen, welches aus einer Gruppe von Materialien ausgewählt ist, welche OPP (orientiertes Polypropylen) oder CPP (ungestrecktes/nicht-orientiertes Polypropylen) enthält, wobei diese Materialien noch EVOH enthalten können. Im Falle von OPP beträgt die Schichtdicke mindestens 4 µm. Beispielsweise bei EVOH mindestens 0,5 µm.

Bei einer bevorzugten Ausführungsform ist an einer Seite des Trägers eine Barriereschicht angebracht und an der anderen Seite ein Barrierelack. Bei einer bevorzugten Ausführungsform ist an der Innenseite (d.h. der dem Produkt zugewandten Seite bzw. Oberfläche) ein Barrierelack angebracht und an der Außenseite eine Barriereschicht. Bei einer bevorzugten Ausführungsform ist an der Innenseite (d.h. der dem Produkte zugewandten Seite bzw. Oberfläche) eine Barriereschicht angebracht und an der Außenseite ein Barrierelack.

Bevorzugt handelt es sich bei der Barriereschicht um wenigstens eine Kunststofffolie. Diese kann dabei aus einem Material bestehen (oder ein Material aufweisen), welches aus einer Gruppe von Materialien ausgewählt ist, welche PET, OPP, CPP (wobei diese Materialien insbesondere metallisiert und/oder beschichtet sind und/oder mit EVOH versehen sind), EVOH, Aluminium (Folie), PLA Folie, einen insbesondere mehrschichtigen Barriereverbund aus den genannten Materialien und dergleichen enthält.

Weiterhin ist es möglich, dass die Barriereschicht an der Innenseite und der Außenseite des Trägers jeweils aus dem gleichen Material oder aus unterschiedlichen Materialien bestehen und/oder unterschiedliche Materialien aufweisen.

Bei einer bevorzugten Ausführungsform weist der Träger eine Grammatur auf, die wenigstens 10 g/m² beträgt und/oder der Träger weist eine Grammatur auf, die geringer ist als 1000 g/m², bevorzugt geringer als 800 g/m², bevorzugt geringer als 600 g/m², bevorzugt geringer als 500 g/m² und besonders bevorzugt geringer als 400 g/m² und besonders bevorzugt geringer als 300 g/m² und bevorzugt geringer als 200 g/m².

Bei einer weiteren bevorzugten Ausführungsform ist der Träger wenigstens einseitig beschichtet und/oder metallisiert. Besonders bevorzugt handelt es sich hierbei um eine anorganische Beschichtung. Als Beschichtungsmaterial kann beispielsweise AlOx oder SiOx oder Mischungen daraus oder andere Halbmetalle, die aus dem Stand der Technik bekannt sind, verwendet werden. Weiterhin kann auch Aluminium als Beschichtungsmaterial eingesetzt werden.

Besonders bevorzugt besteht der Träger bzw. das Basispapier aus zumindest einer Lage, er kann jedoch auch mit einer oder mehreren weiteren Schichten verbunden werden. So kann beispielsweise an dem Träger eine oder mehrere weitere Schichten mittels Extrusionskaschierung, Trockenkaschierung, Leimkaschierung, Thermokaschierung oder Wachskaschierung angeordnet sein.

Bevorzugt weist der Verbund eine weitere Schicht aus Barrierepapieren auf (optional zusätzlich zur Barriereschicht). Daneben können auch biobasierte Folien, Kunststofffolien oder Aluminiumfolien vorgesehen sein.

Daneben wäre es auch möglich, dass der Träger mit einer Transfermetallisierung beschichtet ist. Dabei könnte ein Aufbau wie folgt gestaltet sein:
Farbe; Release-Lack; Metallisierung; Kleber und Basispapier (nach außen oder innen gerichtet).

Bei einer weiteren Ausgestaltung ist auch der Träger selbst als Barriere ausgestattet bzw. weist Barriereeigenschaften auf. So kann der Träger, beispielsweise eine Sauerstoffbarriere im Falle von aus dem Stand der Technik bekanntem NFC-Papier ausbilden.

Weiterhin ist es auch möglich, dass der Träger eingefärbt ist, um so eine Lichtbarriere zu bilden (insbesondere bei Schwarzeinfärbung) oder auch zu dekorativen Zwecken. Auch wäre es denkbar, bei der Verwendung von eingefärbtem Papier für den Träger eine Bedruckung einzusparen.

Besonders bevorzugt weist der Basisträger neben dem Recyclinganteil (PIR oder PCR) noch einem weiteren Anteil auf. Hierfür kommen beispielsweise alle Frischfaserquellen infrage.

Daneben ist wie oben erwähnt, auch eine Kombination aus PIR und PCR denkbar. Dabei kann das Mischungsverhältnis beliebig sein.

Bei einer bevorzugten Ausführungsform ist die Verbindung bzw. der Verbund kompostierbar. So könnte der Verbund etwa PVOH, PHBH, oder PGA-Folien als Barriereschichten aufweisen (Folien auf Polyglycolsäurebasis). Daneben kann auch kompostierbare Druckfarbe, kompostierbarer Kleber oder etwa wie oben erwähnt, als Primer Stärke eingesetzt sein.

Im Folgenden werden vorteilhafte mechanische Eigenschaften angegeben, welche jedoch auch maßgeblich von dem zu erreichenden Zweck oder dem Einsatzgebiet des Verbunds abhängen. Die mechanischen Eigenschaften sind dabei insbesondere abhängig von dem Anteil an recyceltem Material: ein größerer Anteil an Rezyklat bewirkt eine markantere Abweichung der mechanischen Eigenschaften im Vergleich zu aus dem Stand der Technik bekannten Verbünden ohne recyceltes Material.

Auf Grund der Verwendung von Papier mit Rezyklatanteil verringert sich der Wert der mittleren Faserlänge im Vergleich zu Papier ohne Rezyklatanteil und liegt vorzugsweise zwischen 0,1 mm und 3 mm. Durch die im Mittel kürzeren Fasern werden die Falteigenschaften des Papiers positiv beeinflusst.

Bei einer weiteren bevorzugten Ausführungsform weist der Träger eine Zugfestigkeit in Maschinenrichtung auf, die zwischen 16 und 500 N liegt. Dabei kann diese Zugfestigkeit bei einem 15 mm Streifen, bei 20 mm/min gemessen werden.

Bei einer weiteren vorteilhaften Ausführungsform weist der Träger eine Zugfestigkeit in Transversalrichtung gemessen an einem 15 mm Streifen bei 20 mm/min auf, die zwischen 11 N und 450 N liegt.

Bei einer weiteren vorteilhaften Ausführungsform weist der Träger eine Bruchdehnung in Maschinenrichtung auf, die zwischen 1 % und 15 % liegt. Dabei kann diese Bruchdehnung nach DIN ISO 1924-3 oder TAPPI T494 gemessen werden.

Bei einer weiteren vorteilhaften Ausführungsform weist der Träger eine Bruchdehnung in Transversalrichtung auf, die zwischen 2 % und 19 % liegt. Dabei kann diese Bruchdehnung nach DIN ISO 1924-3 oder TAPPI T494 gemessen werden.

Bei einer weiteren vorteilhaften Ausführungsform weist der Träger eine Berstfestigkeit von zumindest 52 kPa auf, gemessen nach ISO2758 oder TAPPI 403.

Bei einer weiteren vorteilhaften Ausführungsform weist der Träger ein Elastizitätsmodul (E-Modul) auf, welches zwischen 1300 MPa und 7000 MPa liegt.

Bei einer weiteren vorteilhaften Ausführungsform weist der Träger eine der nachfolgenden physikalischen Eigenschaften auf.

Bevorzugt weist der Träger einen COBB - Wert zwischen 2 und 35 auf.

Besonders bevorzugt weist der Träger ein spezifisches Volumen auf, welches nicht größer ist als 1,6 cm³/g.

Bei einer weiteren vorteilhaften Ausführungsform weist der Träger eine Feuchtigkeit auf, die zwischen 2 % und 15 % liegt, besonders bevorzugt zwischen 4 % und 8%, insbesondere bevorzugt zwischen 4,5 % und 6,5 %.

Besonders bevorzugt weist der Träger einen Füllstoffgehalt auf, der zwischen 0 und 50 % liegt, bevorzugt zwischen 1 % und 20%, und besonders bevorzugt 3 % und 10%.

Die vorliegende Erfindung ist weiterhin auf eine Lebensmittel- oder Pharmazeutikaverpackung mit einem Verpackungskörper und mit einem Verbund der oben beschriebenen Art gerichtet, wobei die Verpackung bevorzugt aus einer Gruppe von Verpackungen ausgewählt ist, welche Beutel, Flowpacks, Sachets, Liddings, Kapseln, Container, Trays, Wrapper, Twistanwendungen, für den Lebensmittel- und/oder Pharmabereich und auch Home und Personal Care Anwendungen (insb. Hygieneartikel), Medizinische Anwendungen wie beispielsweise. Spritzenverpackungen umfasst.

Bevorzugt weist auch der Verpackungskörper einen vorgegebenen Anteil aus recyceltem Material auf. Besonders bevorzugt ist der recycelte Anteil ein PIR Anteil und/oder ein PCR-Anteil.

Im Folgenden werden konkrete Ausführungsbeispiele für bestimmte Anwendungen offenbart. Bei einer bevorzugten Ausführungsform weist der Verbund eine Barriereschicht aus PVOH auf. Diese kann beispielsweise eine Grammatur zwischen 1 g/m² und 20 g/m², bevorzugt 3 g/m² und 10 g/m² und bevorzugt 4 g/m² und 6 g/m² aufweisen.

Als Träger wird bei dieser Ausgestaltung ein Kraftpapier verwendet. Dieses weist bevorzugt eine Grammatur zwischen 60 g/m² und 150 g/m² bevorzugt zwischen 70 g/m² und 120 g/m² und besonders bevorzugt zwischen 80 g/m² und 100 g/m² auf.

Dieses Kraftpapier kann dabei bevorzugt oder optional eingefärbt sein. Weiterhin weist dieses Kraft Papier einen vorgegebenen PCR-Anteil und/oder PIR-Anteil auf. Optional kann das Kraftpapier auch Bestandteile enthalten, welche aus einer Gruppe von Bestandteilen ausgewählt sind, welche Grasfasern, Weizenfasern, Frischfasern, Süßgras, Sauergras, Seegras, Algen oder Mischungen hieraus enthält.

Weiterhin weist dieser Verbund eine Barriereschicht auf, welche bevorzugt aus Polyamid besteht und bevorzugt eine Grammatur zwischen 15 und 20 g/m², bevorzugt 16 und 18 g/m² aufweist. Dabei kann diese Schicht bevorzugt in Extrusionsbeschichtungsverfahren aufgetragen sein.

Weiterhin ist bevorzugt PE, vorzugsweise LDPE vorgesehen, bevorzugt mit einer Grammatur zwischen 15 g/m² und 25 g/m², bevorzugt 18 g/m² und 22 g/m² und bevorzugt ca. 20 g/m². Auch diese Schicht kann dabei - bevorzugt im Extrusionsbeschichtungsprozess - aufgetragen sein. Optional kann das PE eingefärbt sein.

Bevorzugt kann auch diese Verbindung und/oder der Verbund geprägt, geriffelt, gekreppt oder in anderer Weise mechanisch verändert sein. Daneben kann diese Ausführung auch heißgeprägt oder umgeformt sein.

Dieser Verbund kann für mehrere weitere Anwendungen verwendet werden. So wäre es beispielsweise möglich, diesen Verbund für die Abdeckung eines Trays oder eines Bechers zu verwenden, oder auch für einen Tray oder Becher selbst.

Dabei kann bevorzugt dieser Tray ein zellulosehaltiges Material aufweisen, wie etwa ein Material aus Naturfasern. Dieses zellulosehaltige Material weist dabei bevorzugt eine Grammatur auf, welche zwischen 500 g/m² und 1000 g/m², bevorzugt zwischen 600 g/m² und 900 g/m² und besonders bevorzugt zwischen 730 g/m² und 830 g/m² und besonders bevorzugt bei ca. 780 g/m² liegt.

Weiterhin ist bevorzugt auch diesem Material ein PCR- und/oder PIR-Anteil zugemischt. Bei einer bevorzugten Ausführungsform ist eine Barriereschicht zu dem Füllgut hingewandt. Diese Barriereschicht kann beispielsweise auf Basis von EVOH ausgebildet sein.

Bevorzugt weist das Material auch Additive auf, wie beispielsweise Leimungsmittel, Nassfestmittel und/oder Retentionsmittel. Diese weisen bevorzugt einen Anteil auf, der zwischen 0,1 % und 10 % liegt.

Wenn es sich bei dem herzustellenden Produkt um einen Becher handelt, kann wiederum als Basismaterial für diesen Becher ein zellulosehaltiges Material und insbesondere Material aus Naturfasern verwendet werden. Dieses weist bevorzugt eine Grammatur auf, die zwischen 180 g/m² und 300 g/m² liegt. Auch in diesem Fall kann optional ein PCR- und/oder PIR-Anteil zu gemischt sein.

Bevorzugt ist auch hier eine Barriereschicht zu dem Füllgut hingewandt (beispielsweise auf Basis von EVOH). Weiterhin können auch in diesem Fall Additive beigesetzt sein, insbesondere Leimungsmittel, Nassfestmittel und/oder Retentionsmittel. Diese Additive liegen dabei in einem Anteil von 0,1 % bis 10 % vor.

Optional kann auch über den Tray oder den Becher ein sogenannter "Topper" angebracht sein.

Die vorliegende Erfindung ist weiterhin auf Verfahren zum Herstellen eines Verbunds bevorzugt zur Verpackung von Lebensmitteln gerichtet, insbesondere eines Verbunds der oben beschriebenen Art.

Dabei wird in einem ersten Verfahrensschritt ein Träger bereitgestellt, der eine erste Oberfläche und eine der ersten Oberfläche gegenüberliegende zweite Oberfläche aufweist.

In einem weiteren Verfahrensschritt wird eine erste Barriereschicht an der ersten Oberfläche und eine zweite Barriereschicht an der zweiten Oberfläche angeordnet.

Erfindungsgemäß weist der Träger einen vorgegebenen Anteil aus recyceltem Material auf.

Das Anordnen der ersten Barriereschicht und der zweiten Barriereschicht kann dabei (wenigstens teilweise) zeitgleich erfolgen. Weiterhin ist es möglich, dass zunächst eine Barriereschicht, z.B. die erste Barriereschicht und anschließend die andere, z.B. zweite Barriereschicht angeordnet wird.

Bei einem weiteren bevorzugten Verfahren wird der Verbund an einem Verpackungsbehälter angeordnet, beispielsweise angeklebt oder angeschweißt.

Bei einem weiteren bevorzugten Verfahren wird an einer Barriereschicht und insbesondere an derjenigen Barriereschicht, die (angeordnet an dem späteren Produkt) außen liegen soll, ein Druck angeordnet. Es wäre jedoch auch möglich, dass die Barriereschicht in Form eines Überdrucklacks aufgebracht wird.

Bei einem weiteren bevorzugten Verfahren wird an wenigstens einer Barriereschicht und insbesondere an derjenigen Barriereschicht, die (angeordnet an dem späteren Produkt) innenliegen soll, ein Siegelmedium angeordnet.

Weitere Vorteile und Ausführungsformen ergeben sich aus den beigefügten Darstellungen. Dabei zeigen:
- Fig. 1: eine erste Ausgestaltung eines erfindungsgemäßen Verbundes;
- Fig. 2: eine zweite Ausgestaltung eines erfindungsgemäßen Verbundes; und
- Fig. 3: eine dritte Ausgestaltung eines erfindungsgemäßen Verbundes.

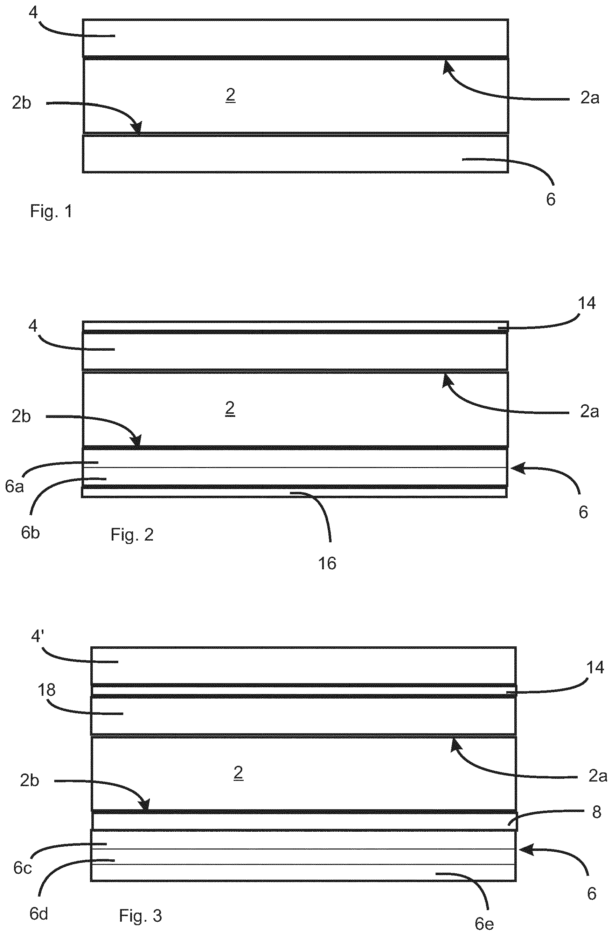

Fig. 1 zeigt eine erste Ausgestaltung eines erfindungsgemäßen Verbundes. Bei dieser Ausgestaltung ist ein Träger 2 vorgesehen, der zwei einander gegenüberliegende Oberflächen 2a, 2b aufweist.

An der ersten Oberfläche 2a ist eine erste Barriereschicht 4 angeordnet und an der zweiten Oberfläche eine zweite Barriereschicht 6. Diese erste Barriereschicht ist dabei bevorzugt eine später außenliegende also einem Produkt abgewandte Schicht. Die zweite Barriereschicht 6 ist bevorzugt später eine innenliegende also dem Produkt zugewandte Schicht.

Wie oben erwähnt, weist der Träger 2 recyceltes Material auf. Dieses recycelte Material ist dabei bevorzugt gleichmäßig in dem Träger 2 angeordnet und/oder verteilt.

Bei der in Fig. 2 gezeigten Ausgestaltung ist an dem Träger ebenfalls wieder die erste Barriereschicht 4 angeordnet. An der Außenseite der Barriereschicht ist weiterhin ein Druck 14 angeordnet.

Weiterhin ist bei der in Fig. 2 gezeigten Ausgestaltung bevorzugt die zweite Barriereschicht wiederum zweischichtig mit zwei Schichten 6a und 6b aufgebaut. Bei einer bevorzugten Ausgestaltung handelt es sich bei der Schicht 6a um eine Polyamidschicht und bei der Schicht 6b um eine LDPE Schicht. Allerdings könnte auch umgekehrt die Schicht 6a eine LDPE Schicht und die Schicht 6b eine Polyamidschicht sein.

Weiterhin ist bevorzugt noch an der Barriereschicht 6 und bevorzugt an der Schicht 6b ein Siegelmedium 16 angeordnet.

Fig. 3 zeigt eine weitere Ausgestaltung eines erfindungsgemäßen Verbundes. Hier ist an dem Träger, genauer an dessen Oberfläche 2a ein Primer bzw. eine Primerschicht 18 angeordnet. An diesem Primer ist bevorzugt ein Druck 14 angeordnet. Die erste Barriereschicht ist hier als eine Überdrucklackschicht 4' ausgebildet, die an dem Druck 14 angeordnet ist.

An der zweiten Oberfläche 2b ist bei der in Fig. 3 gezeigten Ausgestaltung eine Klebeschicht 8, insbesondere ein Kaschierkleber angeordnet. An diesem Kaschierkleber wiederum ist die zweite Barriereschicht 6 angeordnet. Diese zweite Barriereschicht ist hier wiederum mehrschichtig und insbesondere dreischichtig aufgebaut.

Bevorzugt handelt es sich bei der ersten Schicht 6c dieses mehrschichtigen Aufbaus um eine Schicht aus PE. Bevorzugt handelt es sich bei der zweiten Schicht 6d dieser Schicht 6 um eine weitere Schicht aus PE. Bevorzugt handelt es sich bei der dritten Schicht 6e um eine Schicht aus EVOH, besonders bevorzugt aus metallisiertem EVOH. Des Weiteren wäre es denkbar, das EVOH anstelle der Schicht 6c anzuordnen. Somit wird durch die außenliegende PE-Schicht 6e die Siegelfähigkeit des Verbundes gewährleistet.

Es wäre jedoch auch denkbar, die in den Fig. 1 - 3 gezeigten Ausgestaltungen miteinander zu kombinieren und etwa die in Fig. 2 an der Oberseite 2a vorgesehenen Schichten mit den in Fig. 3 an der Unterseite 2b des Trägers vorgesehenen Schichten zu kombinieren, oder auch umgekehrt.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Verbund (1), bevorzugt zur Verpackung von Lebensmitteln, mit einem Träger (2) der eine erste Oberfläche (2a) und eine der ersten Oberfläche (2a) gegenüberliegende zweite Oberfläche (2b) aufweist, wobei an der ersten Oberfläche (2a) eine erste Barriereschicht (4) angeordnet ist und an der zweiten Oberfläche eine zweite Barriereschicht (6) angeordnet ist,
**dadurch gekennzeichnet, dass**
der Träger einen vorgegebenen Anteil aus recyceltem Material aufweist.

2. Verbund nach Anspruch 1,
**dadurch gekennzeichnet, dass**
wenigstens eine Barriereschicht und bevorzugt die erste Barriereschicht und die zweite Barriereschicht einen vorgegebenen Anteil an recyceltem Material aufweisen.

3. Verbund (1) nach Anspruch 1 oder 2,
**dadurch gekennzeichnet, dass**
der recycelte Anteil ein Post-Industrial Rezyklat (PIR) und/oder ein Post-Consumer Rezyklat (PCR) ist.

4. Verbund (1) nach wenigstens einem der vorangegangenen Ansprüche,
**dadurch gekennzeichnet, dass**
der Anteil an recyceltem Material größer ist als 1%, bevorzugt größer als 5%, bevorzugt größer als 10%, bevorzugt größer als 20%, bevorzugt größer als 30%, bevorzugt größer als 40% und besonders bevorzugt größer als 50%.

5. Verbund (1) nach wenigstens einem der vorangegangenen Ansprüche,
**dadurch gekennzeichnet, dass**
zwischen dem Träger und wenigstens einer Barriereschicht und bevorzugt zwischen dem Träger und beiden Barriereschichten (4,6) wenigstens eine weitere Schicht angeordnet ist.

6. Verbund nach dem vorangegangenen Anspruch,
**dadurch gekennzeichnet, dass**
die weitere Schicht aus einer Gruppe von Schichten ausgewählt ist, welche Klebstoffschichten, Farbschichten, Primerschichten, insbesondere biologisch abbaubare Primerschichten, Druckfarbe und dergleichen enthält.

7. Verbund (1) nach wenigstens einem der vorangegangenen Ansprüche,
**dadurch gekennzeichnet, dass**
wenigstens eine Barriereschicht als Überdrucklack ausgebildet ist.

8. Verbund (1) nach wenigstens einem der vorangegangenen Ansprüche,
**dadurch gekennzeichnet, dass**
der Träger eine Grammatur aufweist, die wenigstens 10g/m² beträgt und/oder der Träger eine Grammatur aufweist, die geringer ist als 1000g/m², bevorzugt geringer als 800 g/m², bevorzugt geringer als 600 g/m², bevorzugt geringer als 500 g/m², bevorzugt geringer als 400 g/m², bevorzugt geringer als 300 g/m², bevorzugt geringer als 200 g/m².

9. Verbund (1) nach wenigstens einem der vorangegangenen Ansprüche,
**dadurch gekennzeichnet, dass**
der Träger wenigstens einseitig beschichtet und/oder metallisiert ist.

10. Verbund (1) nach wenigstens einem der vorangegangenen Ansprüche,
**dadurch gekennzeichnet, dass**
der Verbund kompostierbar ist.

11. Verbund (1) nach wenigstens einem der vorangegangenen Ansprüche,
**dadurch gekennzeichnet, dass**
der Träger ein Papier oder ein papierartiges Material umfasst oder es sich bei dem Träger um ein Papier oder ein papierartiges Material handelt.

12. Verbund (1) nach wenigstens einem der vorangegangenen Ansprüche,
**dadurch gekennzeichnet, dass**
der Träger wenigstens eine der nachfolgenden mechanischen Eigenschaften aufweist:
a) eine Zugfestigkeit in Maschinenrichtung zwischen 16 N und 500 N;
b) eine Zugfestigkeit in Transversalrichtung zwischen 11 N und 450 N;
c) eine Bruchdehnung in Maschinenrichtung zwischen 1 % und 15 %;
d) eine Bruchdehnung in Transversalrichtung zwischen 3 % und 18 %;
e) ein Elastizitätsmodul zwischen 1300 MPa Und 7000 MPa;
f) eine Berstfestigkeit von zumindest 52 kPa.

13. Verbund (1) nach wenigstens einem der vorangegangenen Ansprüche,
**dadurch gekennzeichnet, dass**
der Träger wenigstens eine der nachfolgenden physikalischen Eigenschaften aufweist:
a) einen COBB Wert zwischen 2 und 35;
b) ein spezifisches Volumen von maximal 1,6 cm³/g;
c) eine Feuchtigkeit zwischen 2 % und 15 %, bevorzugt zwischen 4 % und 8 %, besonders bevorzugt zwischen 4,5 % und 6,5 %;
d) einen Füllstoffgehalt zwischen 0 und 50 %, bevorzugt zwischen 1 % und 20 %, besonders bevorzugt zwischen 3 % und 10 %.

14. Lebensmittel- oder Pharmazeutikaverpackung mit einem Verpackungskörper und mit einem Verbund nach wenigstens einem der vorangegangenen Ansprüche, wobei die Lebensmittel- oder Pharmazeutikaverpackung bevorzugt aus einer Gruppe von Verpackungen ausgewählt ist, welche Beutel, Flowpacks, Sachets, Liddings, Kapseln, Container, Trays, Wrapper, Twistanwendungen, für Lebensmittel und Pharmabereich und auch Home und Personal Care (Hygieneartikel), Medizinische Anwendungen wie beispielsweise Spritzenverpackungen umfasst.

15. Verfahren zum Herstellen eines Verbunds bevorzugt zur Verpackung von Lebensmitteln mit den Schritten:
Bereitstellen eines Trägers (2), der eine erste Oberfläche (2a) und eine der ersten Oberfläche (2a) gegenüberliegende zweite Oberfläche (2b) aufweist,
Anordnen einer ersten Barriereschicht an der ersten Oberfläche (2a) und Anordnen einer zweiten Barriereschicht an der zweiten Oberfläche (2b),
**dadurch gekennzeichnet, dass**
der Träger einen vorgegebenen Anteil aus recyceltem Material aufweist.
